(19) Europäisches Patentamt
European Patent Office
Office européen des brevets

(11) **EP 3 733 485 B1**

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **20163340.1**

(22) Anmeldetag: **16.03.2020**

(51) Internationale Patentklassifikation (IPC):
**B62D 33/06** (2006.01)     **F16F 9/00** (2006.01)
**F16F 9/504** (2006.01)

(52) Gemeinsame Patentklassifikation (CPC):
**B62D 33/0608; F16F 9/504**

(54) **VORRICHTUNG ZUR LAGERUNG EINES FAHRERHAUSES EINES KRAFTFAHRZEUGS**

DEVICE FOR MOUNTING A DRIVER'S CAB OF A MOTOR VEHICLE

DISPOSITIF DE MONTAGE D'UNE CABINE DE CONDUCTEUR D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2019 DE 102019109534**

(43) Veröffentlichungstag der Anmeldung:
**04.11.2020 Patentblatt 2020/45**

(73) Patentinhaber: **MAN Truck & Bus SE
80995 München (DE)**

(72) Erfinder: **Bucher, Simon
80995 München (DE)**

(74) Vertreter: **v. Bezold & Partner Patentanwälte - PartG mbB
Ridlerstraße 57
80339 München (DE)**

(56) Entgegenhaltungen:
**DE-A1- 102008 045 492     DE-A1- 3 329 327
FR-A1- 2 582 592     GB-A- 1 092 341
US-A- 1 281 079**

**Beschreibung**

Die Erfindung betrifft eine Vorrichtung zur Lagerung eines Fahrerhauses eines Kraftfahrzeugs, vorzugsweise eines Nutzfahrzeugs, auf einem Fahrgestell des Kraftfahrzeugs.

Lastkraftwagen können Fahrerhäuser aufweisen, die mittels einer Fahrerhauslagerung gefedert und gedämpft auf einem Fahrzeugchassis abgestützt sind. Das Fahrzeugchassis wiederum ist gefedert und gedämpft auf Achsen des Lastkraftwagens abgestützt. Die Achsen wiederum sind über Luftreifen gefedert auf einer Fahrbahnoberfläche abgestützt. Von der Fahrbahnoberfläche zum Fahrerhaus ergibt sich eine Reihenschaltung von Nachgiebigkeiten. Das Fahrerhaus hat dadurch eine niedrige Eigenfrequenz (weiche Lagerung).

Niedrigen Beschleunigungen durch die Zentripetalkraft bei Lenkmanövern, durch die Bremskraft oder durch die Beschleunigungskraft führen zu einer geringen Dämpfungskraft gemäß einem einfachen Modell einer geschwindigkeitsproportionalen Dämpfung:

$$F\_d = dv$$

mit F_d = Dämpfungskraft, d = Dämpfungskonstante [kg/s] und v = Geschwindigkeit. Diese geringe Dämpfungskraft führt so zu zum Teil unerwünschten Auswirkungen in allen Dynamikbereichen. Es kann zu ungewünschtem Wanken und Gieren (Querdynamik, z. B. in Kurvenfahrten), Nicken und Stuckern (Längsdynamik, z. B. beim Bremsen und Schalten) sowie Heben und Senken (Vertikaldynamik, z. B. bei langgestreckten Bodenwellen auf Autobahnen) kommen. Dabei kommt es zu einer dynamischen Schwerpunktverschiebung des Fahrerhauses bezüglich des abstützenden Chassis.

Eine Folge der dynamischen Schwerpunktverschiebung des Fahrerhauses kann eine negative Beeinträchtigung der Fahrsicherheit und des Fahrkomforts sein. Zum Beispiel können ausgehend vom Fahrerhaus punktuelle oder einseitige Belastungen auf das Fahrgestell, die Achsen und die Räder auftreten. Wenn es bspw. zum Wanken des Fahrerhauses bei Kurvenfahrten kommt, können die kurvenäußere Fahrzeugaufhängung und die kurvenäußeren Reifen stark belastet werden. Beim Bremsen des Lastkraftwagens kann bspw. das Fahrerhaus nach vorne nicken, wodurch die Vorderachse stark belastet wird. Außerdem ist zu berücksichtigen, dass eine über längere Zeit andauernde leichte Wiegebewegung des Fahrerhauses zur Ermüdung des Fahrers führen kann. Dadurch kann das Unfallrisiko steigen.

Die DE 10 2008 045492 A1 offenbart ein Fahrzeugschwingungsdämpfungssystem für mindestens zwei Fahrzeugteile, zwischen welchen mindestens zwei Gasfedern angeordnet sind. Die Gasfedern sind mit mindestens einer Gasleitung verbunden, wobei die Gasleitung mindestens ein verstellbares Durchlassventil aufweist.

Die DE 33 29 327 A1 betrifft eine Gasdruckfeder zur Abstützung eines Maschinenelementes auf einem schwingenden Erreger, bestehend aus einer mit Gas gefüllten Speicherkammer mit einem Druckgasanschluss, einem mit Druckgas des mittleren Druckes gefüllten Gehäuse, einer beweglichen und/oder nachgiebigen Begrenzungswand, die das Gehäuse abschließt und die an dem Erreger festgelegt ist, einer Durchlassöffnung zwischen dem Innenraum des Gehäuses und demjenigen der Speicherkammer sowie einem in der Durchlassöffnung angeordneten Einlassventil mit einer Verstelleinrichtung. Die Verstelleinrichtung besteht aus mindestens einem durch eine Ringmembran abgedichteten Stellkolben, der nach Überwindung der Kraft einer Feder durch den Differenzdruck zwischen dem Innenraum des Gehäuses und einem durch eine Drosselöffnung mit dem Innenraum des Gehäuses verbundenen Ausgleichsraum verschiebbar ist.

Auch die Patentanmeldung US1281079A offenbart eine gattungsgemäße Vorrichtung zur Lagerung eines Fahrerhauses eines Kraftfahrzeugs.

Die FR 2 582 592 A1 offenbart eine Ausgleichsvorrichtung für ein Stabilitätskorrektursystem einer Fahrzeugaufhängung, umfassend ein Dreiwege-Nivellierventil, das mit einem Stoßdämpferkolben integriert ist, der zwei stoßdämpfende Flüssigkeitskammern trennt. Ein Kurzschlusskanal verbindet die beiden Flüssigkeitskammern und wird durch ein Absperrventil gesteuert, das normalerweise geschlossen ist und dessen Öffnung durch einen Schwellenbeschleunigungssensor in Abhängigkeit von einer Querbeschleunigung gesteuert wird. Alternativ kann ein federbelastetes Absperrventil verwendet werden, das durch eine Trägheitskraft einer bewegbaren Masse gesteuert und in einer horizontalen Einbaulage verwendet wird.

Der Erfindung liegt die Aufgabe zu Grunde, eine alternative und/oder verbesserte Vorrichtung zur Lagerung eines Fahrerhauses zu schaffen.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Erfindung schafft eine Vorrichtung zur Lagerung eines Fahrerhauses eines Kraftfahrzeugs, vorzugsweise eines Nutzfahrzeugs (z. B. Lastkraftwagen), auf einem Fahrgestell des Kraftfahrzeugs. Die Vorrichtung weist mindestens eine Dämpfervorrichtung zur gedämpften Abstützung des Fahrerhauses auf dem Fahrgestell auf. Die mindestens eine Dämpfervorrichtung weist mindestens ein Trägheitsventil (z. B. Masse-Trägheitsventil mit vorbestimmter Trägheitsmasse und/oder zweckmäßig mit einer Drosselfunktionalität) auf, das (funktional und/oder räumlich) stromabwärts von einer Druckstufe und/oder stromabwärts von einer Zugstufe der mindestens einen Dämpfervorrichtung angeordnet und dazu ausgebildet ist, sich, vorzugsweise nur, in Abhängigkeit von einer von dem mindestens einen Trägheitsventil erfahrenen (z. B. aktuellen) Vertikalbeschleunigung zu verstellen (z. B. zu öffnen und/oder zu schließen).

Das Trägheitsventil oder die Trägheitsventile können ungewünschte dynamische Schwerpunktverschiebungen des Fahrerhauses aufgrund von Lenkmanöver, Beschleunigungen, Abbremsungen oder Gangschaltungen verhindern. Ermöglicht wird dies dadurch, dass die mit diesen Fahrsituationen verbundenen relativ geringen Vertikalbeschleunigungen sozusagen von dem Trägheitsventil "herausgefiltert" werden, sodass die Vorrichtung in diesen Situationen steif bleibt und durch Sperren des Dämpfers das Dämpfen und dadurch auch ein Einfedern (oder alternativ auch Ausfedern bei Zugstufenvariante) komplett verhindert oder zumindest eine erhöhte Dämpfungskraft aufweist (da Dämpfer nicht ideal dicht sperrt). Die hierin offenbarte Vorrichtung setzt zudem direkt bei der auf das Fahrzeug (Trägheitsventil entweder auf Fahrzeugachse oder Chassis) einwirkenden Vertikalbeschleunigung an, sodass Sensoren oder Ventile, die auf einer Veränderung der Längs- oder Querbeschleunigung, wie im Stand der Technik nach der FR 2 582 592 A1, basieren, nicht benötigt werden. Somit kann bspw. ein einfacherer Aufbau realisiert werden, da nicht sowohl die Längs- als auch die Querbeschleunigung überwacht werden muss. Zusätzlich ermöglicht die Vorrichtung gemäß der vorliegenden Offenbarung auch ein rein vertikales, ungewünschtes Heben und Senken, d. h. ein Wiegen, des Fahrerhauses, bspw. bei einer Autobahn- oder Landstraßenfahrt mit langestreckten Bodenwellen, zu verhindern, was im Stand der Technik nach der FR 2 582 592 A1 durch die Fokussierung auf Längs- und Querbeschleunigungen nicht gelingt.

In einer Ausführungsform weist das mindestens eine Trägheitsventil ein erstes Trägheitsventil, das stromabwärts von der Druckstufe angeordnet ist, und/oder ein zweites Trägheitsventil, das stromabwärts von der Zugstufe angeordnet ist, auf. Alternativ kann das mindestens eine Trägheitsventil ein Trägheitsventil aufweisen, das sowohl stromabwärts von der Druckstufe als auch stromabwärts von der Zugstufe angeordnet ist.

Erfindungsgemäß ist das mindestens eine Trägheitsventil dazu ausgebildet, sich zu öffnen, wenn die Vertikalbeschleunigung einen vorbestimmten Grenzwert erreicht oder überschreitet. Alternativ oder zusätzlich ist das mindestens eine Trägheitsventil dazu ausgebildet, verschlossen zu bleiben, wenn die Vertikalbeschleunigung einen vorbestimmten Grenzwert unterschreitet. Durch die Ausbildung des Trägheitsventils zur Vorbestimmung des Grenzwertes kann gezielt Einfluss darauf genommen werden, in welchen Fahrsituationen das Trägheitsventil eine Dämpfung noch zulässt und in welchen Fahrsituationen (bzw. in welchen anregenden Beschleunigungen) dies nicht mehr gewünscht ist.

In einem weiteren Ausführungsbeispiel ist der Grenzwert größer als Null und/oder der Grenzwert liegt oberhalb einer Vertikalbeschleunigung, die im Normalbetrieb des Kraftfahrzeugs bei Kurvenfahrten, bei Gangschaltungen, beim Anfahren und/oder beim Abbremsen auftritt. Damit kann die Vorrichtung in diesen Fahrsituationen steif reagieren, d.h. aufgrund des geschlossenen Dämpfers nur minimal oder gar nicht dämpfen (und somit auch nur minimal oder gar nicht federn), sodass es zu keinen ungewünschten dynamischen Schwerpunktverschiebungen des Fahrerhauses kommt.

Erfindungsgemäß weist die Vorrichtung ferner eine Federung zur federnden Abstützung des Fahrerhauses auf dem Fahrgestell auf. Hierbei wird eine Einfederung der Federung durch die mindestens eine Dämpfervorrichtung und das mindestens eine Trägheitsventil im Wesentlichen verhindert, wenn das mindestens eine Trägheitsventil die Druckstufe verschließt (/ein Ausströmen aus der Druckstufe im Wesentlichen verhindert). Zudem oder alternativ wird eine Ausfederung der Federung durch die mindestens eine Dämpfervorrichtung und das mindestens eine Trägheitsventil im Wesentlichen verhindert, wenn das mindestens eine Trägheitsventil die Zugstufe verschließt (/ein Ausströmen aus der Druckstufe im Wesentlichen verhindert).

In einer weiteren Ausführungsform ist das mindestens eine Trägheitsventil in einer aufsteigenden, vorzugsweise im Wesentlichen vertikalen, Einbaulage ausgerichtet. Damit kann auf besonders einfache Weise die Trägheitsfunktionalität bzgl. der Vertikalbeschleunigung realisiert werden.

In einer weiteren Ausführungsform ist das mindestens eine Trägheitsventil ein normal geschlossenes Ventil und/oder in Richtung zu einer Schließstellung elastisch vorgespannt, vorzugsweise federvorgespannt.

In einer Ausführungsvariante ist die mindestens eine Dämpfervorrichtung als eine integrierte Federung-Dämpfervorrichtung, vorzugsweise eine Luftfeder-Dämpfervorrichtung, ausgebildet. Damit kann eine kompakte Einheit vorgesehen sein, die eine Vielzahl von Funktionen integriert. Zweckmäßig kann auch das mindestens eine Trägheitsventil in der integrierten Federung-Dämpfervorrichtung integriert sein.

In einer weiteren Ausführungsvariante weist die Vorrichtung mindestens ein Rückschlagventil auf, das stromabwärts der Druckstufe und parallel zum mindestens einen Trägheitsventil und/oder stromabwärts der Zugstufe und parallel zum mindestens einen Trägheitsventil angeordnet ist. Das Rückschlagventil kann ein Rückströmen in die Druckstufe / Zugstufe ermöglichen, wenn die Vorrichtung ausfedert / einfedert.

In einem Ausführungsbeispiel ist das mindestens eine Trägheitsventil teilweise oder vollständig in der mindestens einen Dämpfervorrichtung integriert, vorzugsweise in eine Zylinder-Kolben-Einheit der mindestens einen Dämpfervorrichtung. Dies kann die Kompaktheit der Vorrichtung erhöhen und somit einen erforderlichen Bauraum verringern. Die Integration kann bspw. in Form von einer Hülse, Klappe, Membran usw. erfolgen.

In einem weiteren Ausführungsbeispiel ist das mindestens eine Trägheitsventil als separates Ventil, vorzugsweise extern von einer Zylinder-Kolben-Einheit der mindestens einen Dämpfervorrichtung, angeordnet.

In einem weiteren Ausführungsbeispiel weist das mindestens eine Trägheitsventil einen in Abhängigkeit von der erfahrenen Vertikalbeschleunigung vorzugsweise vertikal bewegbaren Trägheitsmassenkörper auf, mit der eine Abflussöffnung des Trägheitsventils (z. B. eines Ventilgehäuses des Trägheitsventils), der Druckstufe, der Zugstufe, ein Fluidkanal stromabwärts der Druckstufe und/oder ein Fluidkanal stromabwärts der Zugstufe (z. B. direkt oder indirekt) verschließbar oder freigebbar ist.

In einer Weiterbildung weist der Trägheitsmassenkörper eine Hülse (z. B Außenhülse oder Innenhülse) oder einen Schieber auf (oder ist als solche ausgebildet), mit der die Abflussöffnung verschließbar oder freigebbar ist.

In einer Ausführungsvariante ist die Hülse eine Außenhülse, die zum Verschließen und Freigeben der dazu innenliegenden Abflussöffnung angeordnet ist. Es ist auch möglich, dass die Hülse eine Innenhülse ist, die zum Verschließen und Freigeben der dazu außenliegenden Abflussöffnung angeordnet ist.

In einer weiteren Ausführungsvariante ist das mindestens eine Trägheitsventil dazu ausgebildet, dass eine durch eine Vertikalbeschleunigung bewirkte Vertikalbewegung des Trägheitsmassenkörpers verzögert zu einer durch die Vertikalbeschleunigung bewirkte Vertikalbewegung der Abflussöffnung ist.

In einer weiteren Ausführungsvariante weist das mindestens eine Trägheitsventil ein in Vertikalrichtung elastisches Element (z. B. eine Feder) auf, das einerseits an dem Trägheitsmassenkörper befestigt ist oder anliegt (z. B. mittelbar oder unmittelbar). Vorzugsweise kann das elastische Element andererseits an einem Ventilgehäuse des Trägheitsventils oder einem Zylinder der mindestens einen Dämpfervorrichtung befestigt sein oder anliegen (z. B. mittelbar oder unmittelbar).

In einem Ausführungsbeispiel weist die mindestens eine Dämpfervorrichtung eine Zugstufe auf und/oder die Vorrichtung weist eine, vorzugsweise starre, Drossel und/oder ein Rückschlagventil auf, die stromabwärts der Zugstufe und zweckmäßig parallel zueinander angeordnet sind. Zweckmäßig kann stromabwärts der Zugstufe kein Trägheitsventil angeordnet sein. Die Anordnung des Trägheitsventils in der Druckstufendämpfung kann ausreichend sein, um ungewünschte, dynamische Schwerpunktverschiebungen des Fahrerhauses zu verhindern. Die Vorrichtung kann somit weiter vereinfacht werden.

In einem weiteren Ausführungsbeispiel stehen die Druckstufe und die Zugstufe miteinander über einen Ausgleichsbehälter in Fluidverbindung.

In einer Ausführungsform ist die Druckstufe in einer Einbaulage der mindestens einen Dämpfervorrichtung unterhalb der Zugstufe angeordnet. Damit kann bspw. das Trägheitsventil für die Druckstufe auf besonders einfache Weise realisiert werden, z. B. in Form einer Hülse.

In einer weiteren Ausführungsform weist die mindestens eine Dämpfervorrichtung mehrere, vorzugsweise vier, Dämpfervorrichtungen zum Bereitstellen einer Mehrpunkt-Lagerung, vorzugsweise einer Vierpunkt-Lagerung, für das Fahrerhaus auf. Vorzugsweise kann jeder der mehreren Dämpfervorrichtungen mindestens ein eigenes Trägheitsventil aufweisen, oder die mehreren Dämpfervorrichtungen können sich zumindest teilweise mindestens ein Trägheitsventil teilen.

Die Erfindung betrifft auch ein Kraftfahrzeug, vorzugsweise ein Nutzfahrzeug, besonders bevorzugt ein Lastkraftwagen, aufweisend ein Fahrerhaus, ein Fahrgestell und die Vorrichtung wie hierin offenbart, wobei die mindestens eine Dämpfervorrichtung das Fahrerhaus auf dem Fahrgestell abstützt.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    eine schematische Darstellung eines Nutzfahrzeugs gemäß der vorliegenden Offenbarung;

Figur 2    eine modellhafte Darstellung der Übertragung einer Fahrbahnanregung auf eine Vorrichtung zur Lagerung eines Fahrerhauses;

Figur 3    eine modellhafte Darstellung der Übertragung einer Fahrbahnanregung auf eine Vorrichtung zur Lagerung eines Fahrerhauses gemäß der vorliegenden Offenbarung;

Figur 4    eine schematische Darstellung einer beispielhaften Dämpfervorrichtung gemäß der vorliegenden Offenbarung;

Figur 5    eine schematische Darstellung eines beispielhaften Trägheitsventils gemäß der vorliegenden Offenbarung; und

Figur 6    eine schematische Darstellung eines weiteren beispielhaften Trägheitsventils gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

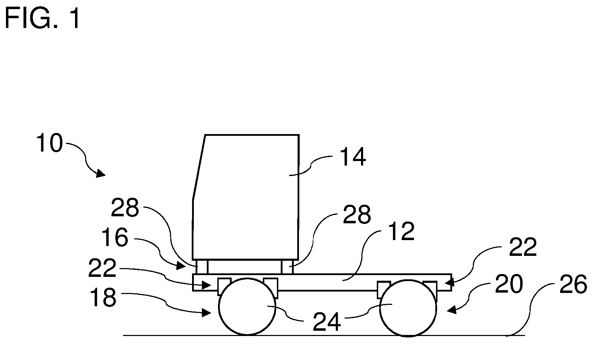

Die Figur 1 zeigt rein schematisch ein als Nutzfahrzeug ausgebildetes Kraftfahrzeug 10. Das Kraftfahrzeug 10 kann zweckmäßig als ein Lastkraftwagen ausgebildet sein. Das Kraftfahrzeug 10 weist ein Fahrgestell (ein Fahrzeugchassis / einen Fahrzeughauptrahmen) 12 und ein Fahrerhaus 14 auf. Das Fahrerhaus 14 ist über eine Vorrichtung 16 auf dem Fahrgestell 12 gefedert und gedämpft abgestützt. Das Fahrerhaus 14 kann beispielsweise ein kippbares Fahrerhaus sein (nicht gesondert dargestellt). An dem Fahrgestell 12 kann ferner eine Vorderachse 18 und mindestens eine Hinterachse 20 gefedert und gedämpft über eine Aufhängung 22 angebracht sein. Über Luftreifen 24 sind die Vorderachse 18 und die Hinterachse 20 auf einer Fahrbahnoberfläche 26 gefedert abgestützt.

Das Fahrerhaus 14 kann beispielsweise in einer Vierpunkt-Lagerung von der Vorrichtung 16 auf dem Fahrgestell 12 abgestützt sein. Die Vierpunkt-Lagerung kann zur Isolation des Fahrerhausees 14 von Fahrbahnanregungen und Vibrationen des Antriebsstrangs dienen. Zweckmäßig kann die Vierpunkt-Lagerung je eine Dämpfer- und Federvorrichtung an einer Lagerstelle an einem der vier bodenseitigen Eckbereiche des Fahrerhauses 14 aufweisen. Beispielsweise kann die Vorrichtung 16 vier Feder-Dämpfer-Einheiten 28 zur Bereitstellung der Vierpunkt-Lagerung aufweisen. Die Feder-Dämpfer-Einheiten 28 können integrierte Einheiten sein, in denen sowohl eine Feder (zum Beispiel eine Luftfeder) und ein Dämpfer integriert sind, zum Beispiel in Form von Luftfeder-Dämpfervorrichtungen mit Luftfederbälgen. Es ist auch möglich, dass eine Federung separat zu einer Dämpfervorrichtung umfasst ist.

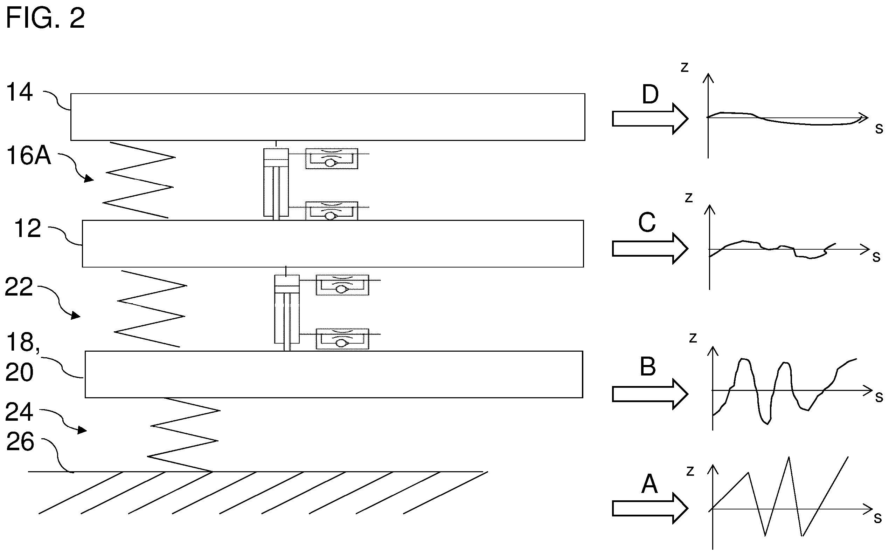

Nachfolgend ist unter Bezugnahme auf Figur 2 modellhaft erläutert, wie es im Betrieb des Kraftfahrzeugs 10 bei geringen Beschleunigungen zu dynamischen Schwerpunktverschiebungen des Fahrerhauses 14 und somit zu einer negativen Beeinträchtigung von Fahrsicherheit und Fahrkomfort kommen kann. Der Aufbau des Kraftfahrzeugs 10 von Figur 1 ist in ein beispielhaftes Modell mit in Reihe geschalteten Federn und Dämpfern umgesetzt. Ferner ist rein beispiel- und skizzenhaft für eine Anregung durch die Fahrbahnoberfläche 26 aufgrund von bspw. Fahrbahnunebenheiten (z-Achse) entlang einer Fahrstrecke (s) in neben dem Feder-Dämpfer-Modell dargestellten Koordinatensystemen gezeigt, wie sich die Reihenschaltung der Feder und Dämpfer auf eine Vertikalbewegung der jeweiligen Komponente (Achsen 18 und 20, Fahrgestell 12, Fahrerhaus 14) auswirken kann.

Die Fahrbahnunebenheiten der Fahrbahnoberfläche 26 (siehe Koordinatensystem A) können zunächst durch die Luftreifen 24 (leicht) gefedert auf die Vorderachse 18 und die Hinterachse 20 übertragen werden. Der gefederte Verlauf der Vertikalbewegung der Achsen 18 und 20 ist im Koordinatensystem B dargestellt.

Die Vertikalbewegungen der Achsen 18 und 20 wiederum kann durch die Aufhängung 22, die sowohl Federn als auch Dämpfer aufweist, gefedert und gedämpft auf das Fahrgestell 12 übertragen werden (siehe Koordinatensystem C). Die Dämpfer der Aufhängung 22 können sowohl stromabwärts von deren Druckstufen als auch stromabwärts von deren Zugstufen jeweils mit einer starren Drossel und einem Rückschlagventil, die parallel geschaltet sind, ausgestattet sein, wie dargestellt ist. Beim Durchströmen der Drosseln kommt es zu Reibungsverlusten des strömenden Fluids, sodass kinetische Strömungsenergie in Wärme umgewandelt wird. Dies führt zu einer Dämpfung.

Die Vertikalbewegungen des Fahrgestells 12 wiederum kann durch die Vorrichtung 16A zur Lagerung des Fahrerhauses 14, die sowohl Federn als auch Dämpfer aufweist, gefedert und gedämpft auf das Fahrerhaus 14 übertragen werden (siehe Koordinatensystem D). Die Dämpfer der Vorrichtung 16A können sowohl stromabwärts von deren Druckstufen als auch stromabwärts von deren Zugstufen jeweils mit einer starren Drossel und einem Rückschlagventil, die parallel geschaltet sind, ausgestattet sein, wie dargestellt ist. Beim Durchströmen der Drosseln kommt es zu Reibungsverlusten des strömenden Fluids, sodass kinetische Strömungsenergie in Wärme umgewandelt wird. Dies führt zu einer Dämpfung.

Gemäß dem Aufbau nach Figur 2 besteht bei der Dämpfung des Fahrerhauses 14 keine Unterscheidung zwischen hohen Beschleunigung, zum Beispiel durch Fahrbahnanregungen, und niedrigen Beschleunigungen, zum Beispiel durch die Zentripetalkraft, die Bremskraft oder die Beschleunigungskraft. Dadurch werden auch vergleichsweise geringe Vertikalbeschleunigungen gedämpft. Die Dämpfung wiederum ermöglicht ein Einfedern durch die Federn der Vorrichtung 16A, sodass es beispielsweise zu einer ungewünschten, langgestreckten, periodischen Hebe- und Senkbewegung des Fahrerhauses kommen kann (siehe Koordinatensystem D).

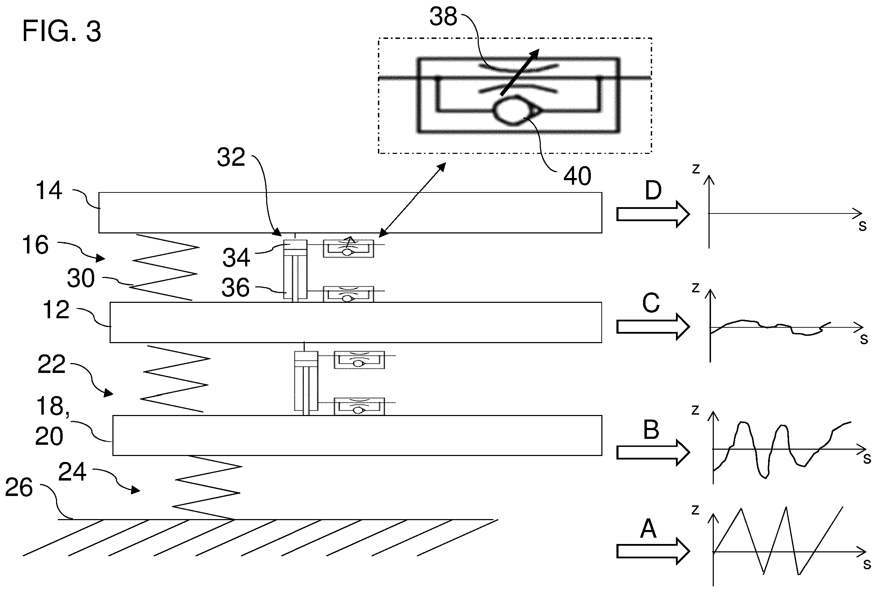

Nachfolgend ist unter Bezugnahme auf Figur 3 beschrieben, wie die Vorrichtung 16 gemäß der vorliegenden Offenbarung ungewünschte dynamische Schwerpunktverschiebungen des Fahrerhauses 14 verhindert oder zumindest verringert.

Das System nach Figur 3 unterscheidet sich vom System nach Figur 2 darin, dass die Vorrichtung 16 zur Lagerung des Fahrerhauses 14 modifiziert ist. Die Vorrichtung 16 weist mindestens eine Federung 30 und mindestens eine Dämpfervorrichtung 32 auf. Wie bereits unter Bezugnahme auf Figur 1 erläutert wurde, ist es möglich, dass die Federung 30 und die Dämpfervorrichtung 32 in einer Einheit integriert sind. Die Dämpfervorrichtung 32 ist als eine Zylinder-Kolben-Einheit ausgeführt und weist eine Druckstufe 34 und eine Zugstufe 36 auf. Stromabwärts der Zugstufe 36 ist eine starre Drossel und ein Rückschlagventil, die parallel geschaltet sind, angeordnet. Eine Besonderheit der Vorrichtung 16 liegt darin, dass stromabwärts der Druckstufe 34 eine verstellbare Drossel angeordnet ist. Die verstellbare Drossel ermöglicht eine Anpassung eines Drosselquerschnitts der Drossel. Parallel zu der Drossel ist ein Rückschlagventil 40 angeordnet.

Die verstellbare Drossel ist als ein Trägheitsventil 38 ausgeführt. Das Trägheitsventil 38 weist eine vorbestimmte Trägheitsmasse auf. Das Trägheitsventil 38 verändert einen Öffnungsquerschnitt, vorzugsweise nur, in Abhängigkeit von einer von dem Trägheitsventil 38 erfahrenen Vertikalbeschleunigung. Das Trägheitsventil 38 ist dabei so eingestellt, dass es aufgrund der Trägheit seiner Trägheitsmasse erst öffnet, wenn die Vertikalbeschleunigung oberhalb der normalen Vertikalbeschleunigungen, die bei Kurvenfahrten, Gangschaltungen, beim Anfahren und oder beim Abbremsen des Kraftfahrzeugs auftreten, liegt. Das heißt, das Trägheitsventil 38 öffnet sich erst, wenn die Vertikalbeschleunigung einen Grenzwert erreicht oder überschreitet. Das Trägheitsventil 38 bleibt verschlossen, wenn die Vertikalbeschleunigung unterhalb des Grenzwerts ist. Der Grenzwert ist größer als Null. Der Grenzwert kann beispielsweise empirisch oder mittels Simulation unterschiedlicher Fahrzeugtypen fahrzeugspezifisch ermittelt werden. Der Grenzwert wird so gewählt, dass normalerweise auftretende Vertikalbeschleunigungen bei normalen Kurvenfahrten, Gangschaltungen, beim Anfahren und Abbremsen unterhalb des Grenzwerts liegen.

Das Trägheitsventil 38 hat die Wirkung, dass die Vorrichtung 16 zur Lagerung des Fahrerhauses 14 eine Unterscheidung der Dämpfung (und folglich einer Bewegung des Fahrerhauses 14) nach der eingeleiteten Vertikalbeschleunigung bereitstellt.

Bei hohen Beschleunigungen (zum Beispiel durch eine unebene Fahrbahn) kommt es zu einer normalen Dämpfung und Federung, wie beim System nach Figur 2. Das Trägheitsventil 38 ist offen. Dämpfungsfluid kann aus der Druckstufe 34 ausströmen und durch das stromabwärts angeordnete Trägheitsventil 38 gedrosselt strömen. Zudem kann Dämpfungsfluid in die Zugstufe 36 durch das zugeordnete Rückschlagventil strömen. Die Federung 30 kann Einfedern. Beim Ausfedern der Federung 30 kann wiederum Fluid aus der Zugstufe 36 ausströmen und durch die stromabwärts angeordnete Drossel strömen. Zudem kann Dämpfungsfluid durch das zugeordnete Rückschlagventil 40 zurück in die Druckstufe 34 strömen.

Bei niedrigen Beschleunigungen (zum Beispiel bei Kurvenfahrten, bei Gangschaltungen, beim Abbremsen oder beim Anfahren) kommt es zu keiner oder einer sehr großen Dämpfung durch die Dämpfervorrichtung 32. Das Trägheitsventil 38 ist geschlossen. Die wirkende Vertikalbeschleunigung reicht nicht aus, um die bewegbare Trägheitsmasse des Trägheitsventils 38 (genügend) zu bewegen und das Trägheitsventil 38 zu öffnen. Da somit keine oder nahezu keine Bewegung der Zylinder-Kolben-Einheit der Dämpfervorrichtung 32 stattfindet, wird auch kein Einfedern durch die Federung 30 ermöglicht. Bei niedrigen Vertikalbeschleunigungen sitzt das Fahrerhaus 14 somit steif bzw. starr auf dem Fahrgestell 12 auf. Es kommt zu keiner dynamischen Schwerpunktverschiebung des Fahrerhauses 14.

In weiteren Ausführungsbeispielen kann die Vorrichtung 16 bspw. anstelle der starren Drossel 48 ebenfalls ein (zweites) Trägheitsventil aufweisen, das ähnlich oder gleich wie das Trägheitsventil 38 ausgebildet sein kann. Dieses Trägheitsventil ist dann stromabwärts der Zugstufe 36 angeordnet und in der Lage, ein Ausströmen von Dämpfungsfluid aus der Zugstufe 36 bei geringen Vertikalbeschleunigungen zu verhindern. Damit wird gleichsam ein Ausfedern der zugeordneten Federung verhindert.

Es ist möglich, dass alle vier Dämpfervorrichtungen 32 der Vierpunkt-Lagerung ein oder zwei eigene Trägheitsventile 38 aufweisen, oder dass sich die vier Dämpfervorrichtungen 32 zumindest teilweise ein Trägheitsventil 38 teilen.

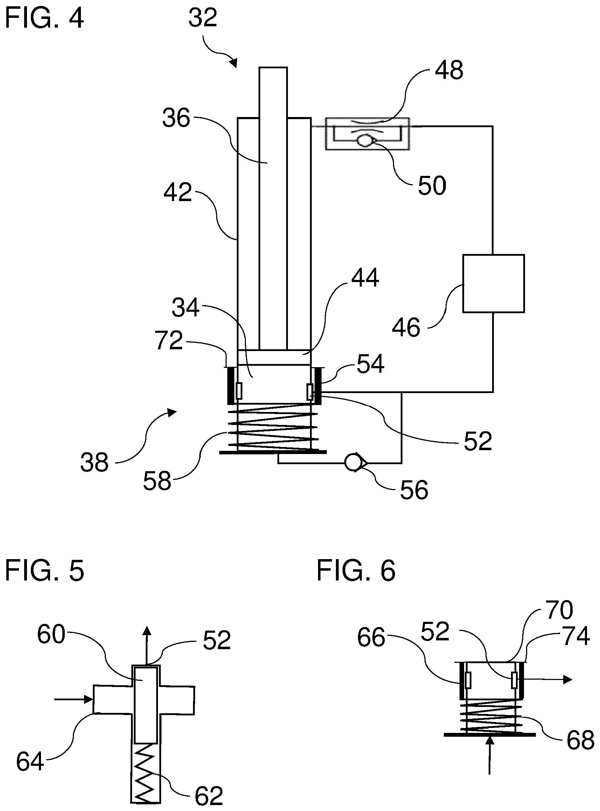

Die Figur 4 zeigt eine beispielhafte Dämpfervorrichtung 32 gemäß der vorliegenden Offenbarung.

Die Dämpfervorrichtung 32 weist einen Zylinder 42 und einen innerhalb des Zylinders 42 bewegbaren Kolben 44 auf. Der Kolben 44 trennt die Druckstufe 34 von der Zugstufe 36 der Dämpfervorrichtung 32. Die Zugstufe 36 ist oberhalb der Druckstufe 34 angeordnet. Die Druckstufe 34 und die Zugstufe 36 stehen über einen Ausgleichsbehälter 46 in Fluidverbindung miteinander. Der Zugstufe 36 ist eine starre Drossel 48 und ein Rückschlagventil 50 zugeordnet. Der Druckstufe 34 ist das Trägheitsventil 38 zugeordnet. Der Druckstufe 34 kann ferner ein Rückschlagventil 56 zugeordnet sein.

Das Trägheitsventil 38 kann eine bewegliche (Außen-)Hülse 54 mit vorbestimmter Trägheitsmasse und Geometrie aufweisen. Das Trägheitsventil 38 kann ferner ein elastisches Element 58, z. B. eine Feder, aufweisen. Das Trägheitsventil 38 ist in einer vertikalen Einbaulage ausgerichtet. Das elastische Element 58 ist einerseits an der Hülse 54 und andererseits an dem Zylinder 42, z. B. einer Unterseite davon, befestigt. Das elastische Element 58 kann den Zylinder 42 umgeben, wie dargestellt ist. Das elastische Element 58 entkoppelt eine Vertikalbewegung des Zylinders 42 teilweise von einer Vertikalbewegung der Hülse 54. Eine Vertikalbewegung des Zylinders 42 führt aufgrund des elastischen Elements 58 und der Trägheit der Hülse 54 zu einer verzögerten Vertikalbewegung der Hülse 54.

Für den Fall einer niedrigen Vertikalbeschleunigung bewegt sich zuerst der Zylinder 42 nach oben. Aufgrund ihrer Massenträgheit und der teilweisen Entkoppelung durch das elastische Element 58 bewegt sich die Hülse 54 etwas verzögert dazu nach oben. Die dadurch entstehende Relativbewegung zwischen dem Zylinder 42 und der Hülse 54 reicht allerdings nicht aus, um die Abflussöffnung 52 freizugeben. Die Hülse 54 versperrt die Abflussöffnung 52 noch immer. Kein Fluid kann ausströmen. Es erfolgt keine Dämpfung und keine Einfederung. Das Trägheitsventil 38 wirkt sozusagen als eine Art "Hochpassfilter" für eingeleitete Vertikalbeschleunigungen. Der Grenzwert für die Vertikalbeschleunigung zum Öffnen des Trägheitsventils 38 kann beispielsweise durch die Anordnung (z. B. Höhenlage) der Abflussöffnung 52, die Größe der Abflussöffnung 52, die Masse der Hülse 54, die Federrate bzw. Federkonstante der Feder 58 und die Dimensionierung der Hülse 54 eingestellt werden.

Für den Fall einer ausreichend hohen Vertikalbeschleunigung ist die Bewegung der Hülse 54 stärker gegenüber dem Zylinder 42 verzögert. Die dadurch entstehende Relativbewegung zwischen dem Zylinder 42 und der Hülse 54 reicht aus, um die Abflussöffnung 52 freizugeben. Die Hülse 54 versperrt die Abflussöffnung 52 nicht mehr. Das Fluid kann ausströmen. Beim Ausströmen durch die freigegebene Abflussöffnung 52 kommt es zu viskosen Reibungsverlusten und somit zur Dämpfung. Die Dämpfung kann beispielsweise eingestellt werden durch die Viskosität des Dämpfungsfluids (zum Beispiel Öl), die Anordnung der Abflussöffnung 52 und die Größe der Abflussöffnung 52. Durch die Bewegung des Kolbens 44 wird ebenfalls eine Einfederung freigegeben.

Die vorliegende Offenbarung ist bezüglich der Anordnung und der Konfiguration des Trägheitsventils 38 nicht auf die Ausführungsform nach Figur 4 beschränkt. Es ist beispielsweise möglich, dass das Trägheitsventil 38 eine Innenhülse aufweist, mit der eine Abflussöffnung der Druckstufe 34 verschließbar und freigebbar ist.

Es ist auch möglich, dass das Trägheitsventil auf andere Art und Weise in der Dämpfervorrichtung 32, vorzugsweise in einer Zylinder-Kolben-Einheit, der Dämpfervorrichtung 32 integriert ist, z. B. als Klappe, Membran usw.. Das Trägheitsventil 38 kann ein normal geschlossenes Ventil sein und/oder in einer Richtung zu einer Schließstellung elastisch vorgespannt, vorzugsweise federvorgespannt, sein. Die elastische Vorspannung kann bspw. durch das elastische Element 58 oder 68 in Kombination mit einem Endanschlag 72 oder 74 für die Hülse 54 oder 66 realisiert werden (siehe Figuren 4 und 6).

Es ist auch denkbar, dass das Trägheitsventil 38 als separates Ventil außerhalb der Zylinder-Kolben-Einheit der Dämpfervorrichtung 32 angeordnet ist, wie beispielhaft in den Figuren 5 und 6 dargestellt ist.

Die Figur 5 zeigt ein Trägheitsventil 38 mit einem Schieber 60, einem elastischen Element 62 und einem Ventilgehäuse 64. Der Schieber 60 ist vertikal in dem Ventilgehäuse 64 bewegbar. Das elastische Element 62 spannt den Schieber 60 zu einer Schließstellung hin vor. In der Schließstellung blockiert der Schieber 60 die Abflussöffnung 52. Das elastische Element 62, z. B. eine Feder, ist einerseits an dem Schieber 60 und andererseits an dem Ventilgehäuse 64 befestigt. Der Schieber 60 ist über das elastische Element 62 an dem Ventilgehäuse 64 abgestützt. Nur bei ausreichend großen Vertikalbeschleunigungen ist die Vertikalbewegung des Schiebers 60 aufgrund der Massenträgheit des Schiebers 60 derart zu der Vertikalbewegung des Ventilgehäuses 64 verzögert, dass die Abflussöffnung 52 des Ventilgehäuses 64 nicht länger durch den Schieber 60 blockiert ist und Fluid durch das Trägheitsventil 38 strömen kann.

Die Figur 6 zeigt ein Trägheitsventil 38 mit einer Hülse 66, einem elastischen Element 68 und einem Ventilgehäuse 70. Die Hülse 66 ist vertikal an dem Ventilgehäuse 70 bewegbar. Das elastische Element 68 spannt die Hülse 66 zu einer Schließstellung hin vor. In der Schließstellung blockiert die Hülse 66 die Abflussöffnung 52. Das elastische Element 68, z. B. eine Feder, ist einerseits an der Hülse 66 und andererseits an dem Ventilgehäuse 70 befestigt. Die Hülse 66 ist über das elastische Element 68 an dem Ventilgehäuse 70 abgestützt. Nur bei ausreichend großen Vertikalbeschleunigungen ist die Vertikalbewegung der Hülse 66 aufgrund der Massenträgheit der Hülse 66 derart zu der Vertikalbewegung des Ventilgehäuses 70 verzögert, dass die Abflussöffnung 52 des Ventilgehäuses 70 nicht länger durch die Hülse 66 blockiert ist und Fluid durch das Trägheitsventil 38 strömen kann.

In den Ausführungsbeispielen der Figuren 4 bis 6 ist der Trägheitsmassenkörper des Trägheitsventils 38 als Außenhülse oder Schieber ausgeführt. Wie bereits erwähnt ist es jedoch möglich, dass der Trägheitsmassenkörper anders ausgeführt und/oder anders angeordnet ist, solange zweckmäßig eine vertikalbeschleunigungsabhängige Relativbewegung zwischen einer von dem Trägheitsmassenkörper freigebbaren Abflussöffnung und dem Trägheitskörper ermöglicht ist.

Die Erfindung ist nicht auf die vorstehend beschriebenen bevorzugten Ausführungsbeispiele beschränkt. Die Erfindung wird ausschließlich durch die beigefügten Ansprüche definiert.

Insbesondere beansprucht die Erfindung auch Schutz für den Gegenstand und die Merkmale der Unteransprüche abhängig von den in Bezug genommenen Ansprüchen.

Bezugszeichenliste

| 10 | Kraftfahrzeug |
| 12 | Fahrgestell |
| 14 | Fahrerhaus |
| 16 | Vorrichtung zur Lagerung des Fahrerhauses |
| 18 | Vorderachse |
| 20 | Hinterachse |
| 22 | Aufhängung |
| 24 | Luftreifen |
| 26 | Fahrbahnoberfläche |
| 28 | Feder-Dämpfer-Einheit |
| 30 | Federung |
| 32 | Dämpfervorrichtung |
| 34 | Druckstufe |
| 36 | Zugstufe |
| 38 | Trägheitsventil (verstellbare Drossel) |
| 40 | Rückschlagventil |
| 42 | Zylinder |
| 44 | Kolben |
| 46 | Ausgleichsbehälter |
| 48 | Drossel |
| 50 | Rückschlagventil |
| 52 | Abflussöffnung |
| 54 | Hülse (Trägheitskörper) |

| | |
|---|---|
| 56 | Rückschlagventil |
| 58 | Elastisches Element |
| 60 | Schieber (Trägheitskörper) |
| 62 | Elastisches Element |
| 64 | Ventilgehäuse |
| 66 | Hülse (Trägheitskörper) |
| 68 | Elastisches Element |
| 70 | Ventilgehäuse |
| 72 | Endanschlag |
| 74 | Endanschlag |

## Patentansprüche

1. Vorrichtung (16) zur Lagerung eines Fahrerhauses (14) eines Kraftfahrzeugs (10), vorzugsweise eines Nutzfahrzeugs, auf einem Fahrgestell (12) des Kraftfahrzeugs (10), aufweisend:

mindestens eine Dämpfervorrichtung (32) zur gedämpften Abstützung des Fahrerhauses (14) auf dem Fahrgestell (12), wobei die mindestens eine Dämpfervorrichtung (32) mindestens ein Trägheitsventil (38) aufweist, das:

- stromabwärts von einer Druckstufe (34) der mindestens einen Dämpfervorrichtung (32) und/oder stromabwärts von einer Zugstufe (36) der mindestens einen Dämpfervorrichtung (32) angeordnet ist, und
- dazu ausgebildet ist, sich, vorzugsweise nur, in Abhängigkeit von einer von dem mindestens einen Trägheitsventil (38) erfahrenen Vertikalbeschleunigung zu verstellen,

eine Federung (30) zur federnden Abstützung des Fahrerhauses (14) auf dem Fahrgestell (12), wobei

- eine Einfederung der Federung (30) durch die mindestens eine Dämpfervorrichtung (32) und das mindestens eine Trägheitsventil (38) im Wesentlichen verhindert wird, wenn das mindestens eine Trägheitsventil (38) die Druckstufe (34) verschließt; und/oder
- eine Ausfederung der Federung (30) durch die mindestens eine Dämpfervorrichtung (32) und das mindestens eine Trägheitsventil im Wesentlichen verhindert wird, wenn das mindestens eine Trägheitsventil (38) die Zugstufe (36) verschließt;

**dadurch gekennzeichnet, dass**
das mindestens eine Trägheitsventil (38) dazu ausgebildet ist, sich zu öffnen, wenn die Vertikalbeschleunigung einen vorbestimmten Grenzwert erreicht oder überschreitet; und/oder verschlossen zu bleiben, wenn die Vertikalbeschleunigung einen vorbestimmten Grenzwert unterschreitet.

2. Vorrichtung (16) nach Anspruch 1, wobei:

das mindestens eine Trägheitsventil ein erstes Trägheitsventil (38), das stromabwärts von der Druckstufe (34) angeordnet ist, und/oder ein zweites Trägheitsventil, das stromabwärts von der Zugstufe (36) angeordnet ist, aufweist; oder das mindestens eine Trägheitsventil ein Trägheitsventil aufweist, das sowohl stromabwärts von der Druckstufe als auch stromabwärts von der Zugstufe (36) angeordnet ist.

3. Vorrichtung (16) nach Anspruch 1 oder Anspruch 2, wobei:
der Grenzwert größer als Null und/oder oberhalb einer Vertikalbeschleunigung liegt, die im Normalbetrieb des Kraftfahrzeugs bei Kurvenfahrten, bei Gangschaltungen, beim Anfahren und/oder beim Abbremsen auftritt.

4. Vorrichtung (16) nach einem der vorherigen Ansprüche, wobei:
das mindestens eine Trägheitsventil (38) in einer aufsteigenden, vorzugsweise im Wesentlichen vertikalen, Einbaulage ausgerichtet ist.

5. Vorrichtung (16) nach einem der vorherigen Ansprüche, wobei

das mindestens eine Trägheitsventil (38) ein normal geschlossenes Ventil ist und/oder in Richtung zu einer Schließstellung elastisch vorgespannt, vorzugsweise federvorgespannt, ist; und/oder
die mindestens eine Dämpfervorrichtung (32) als eine integrierte Federung-Dämpfervorrichtung, vorzugsweise eine Luftfeder-Dämpfervorrichtung, ausgebildet ist.

6. Vorrichtung (16) nach einem der vorherigen Ansprüche, ferner aufweisend:
mindestens ein Rückschlagventil (40), das stromabwärts der Druckstufe (34) und parallel zum mindestens einen Trägheitsventil (38) und/oder stromabwärts der Zugstufe (36) und parallel zum mindestens einen Trägheitsventil (38) angeordnet ist.

7. Vorrichtung (16) nach einem der vorherigen Ansprüche, wobei:

das mindestens einen Trägheitsventil (38) teilweise oder vollständig in der mindestens einen Dämpfervorrichtung (32) integriert ist, vorzugsweise in eine Zylinder-Kolben-Einheit der mindestens einen Dämpfervorrichtung (32); oder das mindestens eine Trägheitsventil (38) als separates Ventil extern von einer Zylinder-Kolben-Einheit der mindestens einen Dämpfervorrichtung (32) angeordnet ist.

8. Vorrichtung (16) nach einem der vorherigen Ansprüche, wobei:
das mindestens eine Trägheitsventil (38) einen in Abhängigkeit von der erfahrenen Vertikalbeschleunigung vertikal bewegbaren Trägheitsmassenkörper aufweist, mit der eine Abflussöffnung (52) des Trägheitsventils (38), der Druckstufe (34), der Zugstufe (36) oder ein Fluidkanal stromabwärts der Druckstufe (34) oder ein Fluidkanal stromabwärts der Zugstufe (36) verschließbar oder freigebbar ist.

9. Vorrichtung (16) nach Anspruch 8, wobei:
der Trägheitsmassenkörper eine Hülse (54) oder einen Schieber (60) aufweist, mit der die Abflussöffnung (52) verschließbar oder freigebbar ist.

10. Vorrichtung (16) nach Anspruch 8 oder Anspruch 9, wobei:

das mindestens eine Trägheitsventil (38) dazu ausgebildet ist, dass eine durch eine Vertikalbeschleunigung bewirkte Vertikalbewegung des Trägheitsmassenkörpers verzögert zu einer durch die Vertikalbeschleunigung bewirkte Vertikalbewegung der Abflussöffnung (52) ist; und/oder
das mindestens eine Trägheitsventil (38) ein in Vertikalrichtung elastisches Element (58, 62, 68) aufweist, das einerseits an dem Trägheitsmassenkörper befestigt ist oder anliegt und vorzugsweise andererseits an einem Ventilgehäuse (64, 70) des Trägheitsventils (38) oder einem Zylinder (42) der mindestens einen Dämpfervorrichtung (32) befestigt ist oder anliegt.

11. Vorrichtung (16) nach einem der vorherigen Ansprüche, wobei

die mindestens eine Dämpfervorrichtung (32) eine Zugstufe (36) aufweist; und
die Vorrichtung (16) eine, vorzugsweise starre, Drossel (48) und ein Rückschlagventil (50) aufweist, die stromabwärts der Zugstufe (36) und parallel zueinander angeordnet sind.

12. Vorrichtung (16) nach einem der vorherigen Ansprüche, wobei:

die Druckstufe (34) und die Zugstufe (36) miteinander über einen Ausgleichsbehälter (46) in Fluidverbindung stehen; und/oder
die Druckstufe (34) in einer Einbaulage der mindestens einen Dämpfervorrichtung (32) unterhalb der Zugstufe (36) angeordnet ist.

13. Vorrichtung (16) nach einem der vorherigen Ansprüche, wobei:
die mindestens eine Dämpfervorrichtung (32) mehrere, vorzugsweise vier, Dämpfervorrichtungen (32) zum Bereitstellen einer Mehrpunkt-Lagerung, vorzugsweise einer Vierpunkt-Lagerung, für das Fahrerhaus (14) aufweist,
wobei vorzugsweise:

- jeder der mehreren Dämpfervorrichtungen (32) mindestens ein eigenes Trägheitsventil (38) aufweist; oder
- die mehreren Dämpfervorrichtungen (32) sich zumindest teilweise mindestens ein Trägheitsventil (38) teilen.

14. Kraftfahrzeug (10), vorzugsweise Nutzfahrzeug, besonders bevorzugt Lastkraftwagen, aufweisend:

ein Fahrerhaus (14);
ein Fahrgestell (12); und
die Vorrichtung (16) nach einem der vorherigen Ansprüche, wobei die mindestens eine Dämpfervorrichtung (32) das Fahrerhaus (14) auf dem Fahrgestell (12) abstützt.

**Claims**

1. A device (16) for mounting a driver's cab (14) of a motor vehicle (10), preferably a utility vehicle, on a chassis (12) of the motor vehicle (10), comprising:

at least one damper device (32) for damped support of the cab (14) on the chassis (12), wherein the at least one damper device (32) comprises at least one inertia valve (38) which:

- is arranged downstream of a compression stage (34) of the at least one damper device (32) and/or downstream of a rebound stage (36) of the at least one damper device (32), and
- is configured to adjust, preferably only, depending on a vertical acceleration experienced by the at least one inertia valve (38),

a suspension (30) for resiliently supporting the cab (14) on the chassis (12), wherein

- a compression of the suspension (30) is substantially prevented by the at least one damper device (32) and the at least one inertia valve (38) when the at least one inertia valve (38) closes the compression stage (34); and/or

- a compression of the suspension (30) is substantially prevented by the at least one damper device (32) and the at least one inertia valve when the at least one inertia valve (38) closes the rebound stage (36);

**characterized in that**
the at least one inertia valve (38) is configured to open when the vertical acceleration reaches or exceeds a predetermined limit value; and/or to remain closed when the vertical acceleration falls below a predetermined limit value.

2. The device (16) according to claim 1, wherein:

the at least one inertia valve comprises a first inertia valve (38) arranged downstream of the compression stage (34) and/or a second inertia valve arranged downstream of the rebound stage (36); or
the at least one inertia valve comprises an inertia valve arranged both downstream of the compression stage and downstream of the rebound stage (36).

3. The device (16) according to claim 1 or claim 2, wherein:
the limit value is greater than zero and/or above a vertical acceleration that occurs during normal operation of the motor vehicle when cornering, changing gears, starting, and/or braking.

4. The device (16) according to one of the previous claims, wherein:
the at least one inertia valve (38) is aligned in an ascending, preferably substantially vertical, installation position.

5. The device (16) according to one of the previous claims, wherein

the at least one inertia valve (38) is a normally closed valve and/or is elastically biased, preferably spring-biased, toward a closed position; and/or
the at least one damper device (32) is configured as an integrated spring-damper device, preferably an air spring-damper device.

6. The device (16) according to one of the preceding claims, further comprising:
at least one check valve (40) arranged downstream of the compression stage (34) and parallel to the at least one inertia valve (38) and/or downstream of the rebound stage (36) and parallel to the at least one inertia valve (38).

7. The device (16) according to one of the previous claims, wherein:

the at least one inertia valve (38) is partially or completely integrated into the at least one damper device (32), preferably into a cylinder-piston unit of the at least one damper device (32); or the at least one inertia valve (38) is arranged as a separate valve external to a cylinder-piston unit of the at least one damper device (32).

8. The device (16) according to one of the previous claims, wherein:
the at least one inertia valve (38) comprises an inertial mass body that can be moved vertically dependent on the vertical acceleration experienced, with which an outlet opening (52) of the inertia valve (38), of the compression stage (34), of the rebound stage (36) or a fluid channel downstream of the compression stage (34) or a fluid channel downstream of the rebound stage (36) can be closed or opened.

9. The device (16) according to claim 8, wherein:
the inertial mass body comprises a sleeve (54) or a slide (60) with which the outlet opening (52) can be closed or opened.

10. The device (16) according to claim 8 or claim 9, wherein:

the at least one inertia valve (38) is configured such that a vertical movement of the inertial mass body caused by a vertical acceleration is delayed relative to a vertical movement of the outlet opening (52) caused by the vertical acceleration; and/or
the at least one inertial valve (38) comprises a vertically elastic element (58, 62, 68) which is fastened to or rests against the inertial mass body on one side and preferably fastened to or rests against a valve housing (64, 70) of the inertia valve (38) or a cylinder (42) of the at least one damper device (32).

11. The device (16) according to one of the preceding claims, wherein

the at least one damper device (32) comprises a rebound stage (36); and
the device (16) comprises a, preferably rigid, throttle (48) and a check valve (50) which are arranged downstream of the rebound stage (36) and parallel to each other.

12. The device (16) according to one of the previous claims, wherein:

the compression stage (34) and the rebound stage (36) are in fluid communication with each other via a compensation reservoir (46); and/or the compression stage (34) is arranged below the rebound stage (36) in an installation position of the at least one damper device (32).

13. The device (16) according to one of the previous claims, wherein:
the at least one damper device (32) comprises a plurality of, preferably four, damper devices (32) for providing a multi-point mounting, preferably a four-point mounting, for the driver's cab (14),
wherein preferably:

- each of the plurality of damper devices (32) comprises at least one separate inertia valve (38); or
- the plurality of damper devices (32) share at least one inertia valve (38) at least in part.

14. A motor vehicle (10), preferably a utility vehicle, particularly preferably a truck, comprising:

a driver's cab (14);
a chassis (12); and
the device (16) according to one of the preceding claims, wherein the at least one damper device (32) supports the driver's cab (14) on the chassis (12).

## Revendications

1. Dispositif (16) de montage d'une cabine de conducteur (14) d'un véhicule à moteur (10), de préférence d'un véhicule utilitaire, sur un châssis (12) du véhicule à moteur (10), comportant :

au moins un dispositif d'amortissement (32) pour l'appui amorti de la cabine de conducteur (14) sur le châssis (12), l'au moins un dispositif d'amortissement (32) comportant au moins une soupape à inertie (38) qui :

- est disposée en aval d'un étage de pression (34) de l'au moins un dispositif d'amortissement (32) et/ou en aval d'un étage de traction (36) de l'au moins un dispositif d'amortissement (32), et
- est formée pour s'ajuster, de préférence seulement, en fonction d'une accélération verticale subie par l'au moins une soupape à inertie (38),

une suspension (30) pour le support sur ressorts de la cabine de conducteur (14) sur le châssis (12),

- une compression de la suspension (30) par l'au moins un dispositif d'amortissement (32) et l'au moins une soupape à inertie (38) étant sensiblement empêchée lorsque l'au moins une soupape à inertie (38) ferme l'étage de pression (34) ; et/ou
- une détente de la suspension (30) par l'au moins un dispositif d'amortissement (32) et par l'au moins une soupape à inertie étant sensiblement empêchée lorsque l'au moins une soupape à inertie (38) ferme l'étage de traction (36) ;

**caractérisé en ce que**
l'au moins une soupape à inertie (38) est formée pour s'ouvrir lorsque l'accélération verticale atteint ou dépasse une valeur limite prédéfinie ; et/ou pour rester fermée lorsque l'accélération verticale ne dépasse pas une valeur limite prédéfinie.

2. Dispositif (16) selon la revendication 1,

l'au moins une soupape à inertie comportant une première soupape à inertie (38), qui est disposée en aval de l'étage de pression (34), et/ou une deuxième soupape à inertie, qui est disposée en aval de l'étage de traction (36) ; ou l'au moins une soupape à inertie comportant une soupape à inertie, qui est disposée à la fois en aval de l'étage de pression et en aval de l'étage de traction (36).

3. Dispositif (16) selon la revendication 1 ou la revendication 2,
la valeur limite étant supérieure à zéro et/ou supérieure à une accélération verticale qui se produit lors du fonctionnement normal du véhicule à moteur dans les virages, lors de changements de vitesse, lors du démarrage et/ou lors du freinage.

4. Dispositif (16) selon l'une des revendications précédentes,
l'au moins une soupape à inertie (38) étant orientée dans une position de montage ascendante, de préférence sensiblement verticale.

5. Dispositif (16) selon l'une des revendications précédentes,

l'au moins une soupape à inertie (38) étant une soupape normalement fermée et/ou étant précontrainte élastiquement, de préférence précontrainte par ressort, en direction d'une position fermée ; et/ou
l'au moins un dispositif d'amortissement (32) étant formé comme un dispositif d'amortissement à suspension intégré, de préférence comme un dispositif d'amortissement à ressort pneumatique.

6. Dispositif (16) selon l'une des revendications précédentes, comportant en outre :
au moins une soupape antiretour (40), qui est disposée en aval de l'étage de pression (34) et parallèlement à l'au moins une soupape à inertie (38) et/ou en aval de l'étage de traction (36) et parallèlement à l'au moins une soupape à inertie (38).

7. Dispositif (16) selon l'une des revendications précédentes,

   l'au moins une soupape à inertie (38) étant en partie ou totalement intégrée dans l'au moins un dispositif d'amortissement (32), de préférence dans une unité cylindre-piston de l'au moins un dispositif d'amortissement (32) ; ou
   l'au moins une soupape à inertie (38) étant disposée en tant que soupape séparée à l'extérieur d'une unité cylindre-piston de l'au moins un dispositif d'amortissement (32).

8. Dispositif (16) selon l'une des revendications précédentes,
le corps de masse à inertie comportant un corps de masse à inertie pouvant être déplacé verticalement en fonction de l'accélération verticale subie, qui permet de fermer ou de dégager un orifice de sortie (52) de la soupape à inertie (38), de l'étage de pression (34), de l'étage de traction (36) ou un canal de fluide en aval de l'étage de pression (34) ou un canal de fluide en aval de l'étage de traction (36).

9. Dispositif (16) selon la revendication 8,
le corps de masse à inertie comportant un manchon (54) ou un coulisseau (60) qui permet de fermer ou de dégager l'orifice de sortie (52).

10. Dispositif (16) selon la revendication 8 ou la revendication 9,

   l'au moins une soupape à inertie (38) étant formée pour retarder un mouvement vertical du corps de masse à inertie provoqué par une accélération verticale par rapport à un mouvement vertical de l'orifice de sortie (52) provoqué par l'accélération verticale ; et/ou
   l'au moins une soupape à inertie (38) comportant un élément (58, 62, 68) élastique dans la direction verticale, qui est fixé ou repose d'une part sur le corps de masse à inertie et qui, de préférence, est fixé ou repose d'autre part sur un boîtier (64, 70) de la soupape à inertie (38) ou sur un cylindre (42) de l'au moins un dispositif d'amortissement (32).

11. Dispositif (16) selon l'une des revendications précédentes,

   l'au moins un dispositif d'amortissement (32) comportant un étage de traction (36) ; et
   le dispositif (16) comportant un étranglement (48) de préférence rigide et une soupape antiretour (50), qui sont disposés en aval de l'étage de traction (36) et parallèlement l'un à l'autre.

12. Dispositif (16) selon l'une des revendications précédentes,

   l'étage de pression (34) et l'étage de traction (36) étant en communication fluidique l'un avec l'autre par un réservoir de compensation 46) ; et/ou
   l'étage de pression (34) étant disposé au-dessous de l'étage de traction (36) dans une position de montage de l'au moins un dispositif d'amortissement (32).

13. Dispositif (16) selon l'une des revendications précédentes,

   l'au moins un dispositif d'amortissement (32) comportant plusieurs, de préférence quatre, dispositifs d'amortissement (32) destinés à fournir un montage multipoint, de préférence un montage à quatre points, pour la cabine de conducteur (14),
   de préférence :

      - chacun des plusieurs dispositifs d'amortissement (32) comportant au moins une soupape à inertie (38) dédiée ; ou
      - les plusieurs dispositifs d'amortissement (32) partageant au moins en partie au moins une soupape à inertie (38).

14. Véhicule à moteur (10), de préférence véhicule utilitaire, de manière particulièrement préférée camion, comportant :

   une cabine de conducteur (14) ;
   un châssis (12) ; et
   le dispositif (16) selon l'une des revendications précédentes, l'au moins un dispositif d'amortissement (32) supportant la cabine de conducteur (14) sur le châssis (12).

FIG. 1

# FIG. 2

FIG. 3

EP 3 733 485 B1

FIG. 4

FIG. 5

FIG. 6

## EP 3 733 485 B1

**IN DER BESCHREIBUNG AUFGEFÜHRTE DOKUMENTE**

**In der Beschreibung aufgeführte Patentdokumente**

- DE 102008045492 A1
- DE 3329327 A1
- US 1281079 A
- FR 2582592 A1